# EUROPÄISCHE PATENTSCHRIFT

(11) **EP 3 416 774 B1**
(45) Veröffentlichungstag und Bekanntmachung des Hinweises auf die Patenterteilung: **30.11.2022**
(21) Anmeldenummer: 17705831.0
(22) Anmeldetag: 13.02.2017
(51) Int. Cl.: B23B 31/02, G06K 19/04, G06K 19/077

(54) **VORRICHTUNG ZUR BEFESTIGUNG EINES DATENTRÄGERS AN EINER WERKZEUGAUFNAHME, WERKZEUGAUFNAHME UND WERKZEUGANORDNUNG**
DEVICE FOR SECURING A DATA CARRIER TO A TOOL HOLDER, TOOL HOLDER AND TOOL SYSTEM
DISPOSITIF DE FIXATION D'UN SUPPORT DE DONNÉES À UN MANDRIN DE SERRAGE D'OUTIL, MANDRIN DE SERRAGE D'OUTIL ET ENSEMBLE OUTIL

(30) Priorität: 16.02.2016 DE 102016102692
(43) Veröffentlichungstag der Anmeldung: 26.12.2018
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2017/053122
(87) Internationale Veröffentlichungsnummer: WO 2017/140613

(56) Entgegenhaltungen:
- EP-A1- 3 050 654
- JP-A- 2000 343 344
- JP-A- 2004 202 632
- JP-A- 2011 045 968
- US-A1- 2007 124 220
- US-A1- 2010 171 276
- US-A1- 2013 057 387
- DATABASE WPI Week 201510 Thomson Scientific, London, GB; AN 2015-103525 XP002769265, -& CN 204 009 984 U (SHANGHAI HILONG PETROCHEMICAL TUBE INST) 10. Dezember 2014 (2014-12-10)

## Beschreibung

Die Erfindung betrifft eine Werkzeuganordnung nach dem Oberbegriff des Anspruchs 1. Unter anderem aus der DIN 69893 sind Werkzeugaufnahmen bekannt, welche eine genormte Bohrung zur Aufnahme eines Datenträgers aufweisen. Entsprechende Normen gibt es für nahezu alle Werkzeugaufnahmen mit gängigen Schnittstellen zwischen Werkzeugaufnahme und Maschinenspindel. Derartige Datenträger können speziell für Werkzeugaufnahmen konzipiert sein, wie in DIN 69873 normiert. Mittels dieser Datenträger, welche beispielsweise als RFID-Chips ausgebildet sind, können die Werkzeugaufnahmen vollautomatisch identifiziert und weitere Messdaten erfasst werden. Hierdurch werden falsche Zuordnungen oder fehlende Werkzeuge vermieden und ein maximaler Werkzeugeinsatz und eine hohe Maschinenverfügbarkeit gewährleistet. Dabei werden alle werkzeugrelevanten Daten berührungslos auf dem Datenträger gespeichert, der mit der Werkzeugaufnahme fest verbunden ist. Durch automatisches Einlesen in den Anlagenspeicher sind alle Daten immer korrekt, stets aktuell und können beim Be- und Entladen des Werkzeugs laufend angepasst werden. Durch elektronische Datenübertragung sind die entsprechenden Informationen über das Werkzeug immer verfügbar. Der Datenträger kann auch nur zur individuellen Kennzeichnung des Werkzeugs verwendet werden. Weitere Daten werden dann unter Bezug auf diese Kennzeichnung in einer externen Datenbank gespeichert. Die Befestigung eines solchen Datenträgers bereitet jedoch oftmals Probleme. Zum einen beeinflusst die Positionierung des Datenträgers die Wuchtung der Werkzeugaufnahme, gerade wenn der Datenträger weiter entfernt von der Rotationsachse an der Außenseite der Werkzeugaufnahme montiert wird. Erfolgt die Anbringung hingegen nahe der Rotationsachse innerhalb der Werkzeugaufnahme ist der Datenträger oftmals aufgrund der Abschirmung durch die Werkzeugaufnahme nicht mehr auslesbar. Zum anderen bereitet die Art der Befestigung Probleme, da die vielfach verwendete Klebeverbindung sich über die Lebensdauer der Werkzeugaufnahme lösen kann, wodurch der Datenträger im Betrieb herausgeschleudert wird, was ein erhebliches Gefährdungspotential darstellt. Zudem ist die Qualität von Klebeverbindungen starken Schwankungen unterworfen, unter anderem auch abhängig vom ausführenden Personal und von der Sorgfalt, mit der die Klebung ausgeführt wird.

Natürlich ist die Anwendung der erfindungsgemäßen Vorrichtung nicht auf genormte Bohrungen und auf Werkzeugaufnahmen nach DIN 69893 beschränkt. Die Vorrichtung kann bei geeigneter Gestaltung mit vielen Varianten von genormten und nicht genormten Werkzeugaufnahmen angewendet werden, an denen Datenträger mit unterschiedlichen Formen und Größen angebracht werden können.

Aufgabe der Erfindung ist es daher, eine Werkzeuganordnung zu schaffen, welche eine sichere, dauerhafte und einfach zu erzielende Befestigung eines Datenträgers an einer Werkzeugaufnahme ermöglicht.

Die CN204009984 U betrifft eine Ölbohrausrüstung mit einem zylindrischen Loch. Mit einer Montagestruktur für einen Datenträger.

Die US2007/0124220 A1 betrifft Verfahren und Instrumente für Rohre und Ölbohrausstattungen. Dabei wird dort an einem Bohrrohr eine Identifikationsvertiefung vorgesehen, in die eine Vorrichtung zur Befestigung eines Datenträgers eingesetzt werden kann.

Die JP2000/343344 offenbart eine Werkzeuganordnung gemäß dem Oberbegriff des Patentanspruchs 1, mit einer Befestigungsvorrichtung für einen Datenchip in scheibenförmiger Ausgestaltung mit einer Stufe im äußeren Umfangsbereich, welcher in einem kreisrunden Loch eines Objekts eingesetzt werden kann.

Die JP2004/202632 offenbart einen Werkzeughalter, für eine Drehbank, wobei dort ein Hülsenteil mit unterschiedlichen Schaftteilen der drehbar verbindbar ist.

Die US2013/0057387 A1 offenbart Identifizierungstags, welche auf unterschiedlichen Arten in hülsenförmige Körper, insbesondere Rohre integriert werden kann.

Diese Aufgabe wird durch eine Werkzeuganordnung mit den Merkmalen des Anspruchs 1 gelöst. Vorteilhafte Ausgestaltungen der Erfindung sind in den Unteransprüchen angegeben. Die erfindungsgemäße Werkzeuganordnung zeichnet sich dadurch aus, dass die Vorrichtung zur Befestigung des Datenträgers an der Werkzeugaufnahme einen hülsenförmigen Grundkörper umfasst, welcher an einem ersten Ende mindestens einen radial nach innen vorstehenden Vorsprung und im Bereich eines dem ersten Ende gegenüberliegenden zweiten Endes mindestens einen radial nach außen vorstehenden Vorsprung aufweist. Hierdurch wird ermöglicht, dass zum einen der Datenträger in der Vorrichtung durch den radial nach innen vorstehenden Vorsprung formschlüssig sicher gehalten wird und zum anderen die Vorrichtung mit Hilfe des radial nach außen vorstehenden Vorsprungs zuverlässig und schnell in einer entsprechenden Datenträgeraufnahme in einer Werkzeugaufnahme befestigbar ist.

Der hülsenförmige Grundkörper kann einen kreisrunden Querschnitt aufweisen. Es ist jedoch auch möglich, dass der hülsenförmige Grundkörper einen eckigen, beispielsweise dreieckigen oder viereckigen Querschnitt aufweist, auch mit abgerundeten Ecken, wodurch eine lagegenaue Positionierung ermöglicht wird. Die Ausgestaltung des inneren Querschnitts der Hülse orientiert sich dabei in der Regel an der Form des einzusetzenden Datenträgers, der äußere Querschnitt an der Ausformung der Ausnehmung im Werkzeughalter. Die Form des Datenträgers wird durch den Einsatz der Erfindung somit unabhängig von der Form der Ausnehmung im Werkzeughalter. Der hülsenförmige Grundkörper ist dabei vorzugsweise einteilig ausgebildet.

In einer bevorzugten Ausführungsform kann der radial nach innen vorstehende Vorsprung durch einen radial nach innen vorstehenden umlaufenden Ringsteg gebildet sein. Hierdurch stützt sich der Datenträger vollumfänglich an dem Ringsteg ab, wodurch eine besonders stabile Befestigung auch bei hohen Drehzahlen und daraus resultierenden hohen Fliehkräften auf den Datenträger erreicht wird. Zudem kann aufgrund der stabilen vollumfänglichen Abstützung der Ringsteg auch besonders dünnwandig ausgebildet werden, so dass der Datenträger mit der Vorrichtung in einer Werkzeugaufnahme nahe der Außenfläche positionierbar ist, wodurch das Auslesen des Datenträgers erleichtert wird. Vorzugsweise wird der Datenträger lediglich in einem schmalen äußeren Randbereich durch den Vorsprung abgedeckt, so dass der Großteil seiner Fläche gegenüber einem Lesegerät frei bleibt.

In einer besonders bevorzugten Ausführungsform kann der mindestens eine radial nach außen vorstehende Vorsprung in Radialrichtung elastisch beweglich ausgebildet sein. Hierdurch wird ermöglicht, dass sich der nach außen vorstehende Vorsprung beim Einsetzen in eine entsprechende Datenträgeraufnahme in der Werkzeugaufnahme radial nach innen elastisch federnd verformt und anschließend in der gewünschten Halteposition in eine sich radial nach außen erstreckende Aussparung in der Datenträgeraufnahme federnd eingreift. Hierdurch kann besonders schnell eine formschlüssige Verbindung zwischen der Vorrichtung und der Werkzeugaufnahme erreicht werden. Nach dem Einsetzen ist sowohl der Datenträger als auch der hülsenförmige Grundkörper vollkommen in der Aussparung der Datenträgeraufnahme in der Werkzeugaufnahme versenkt.

Bevorzugt können im Bereich des zweiten Endes des hülsenförmigen Grundkörpers mehrere in Umfangsrichtung voneinander beabstandete radial nach außen vorstehende Vorsprünge vorgesehen sein. Hierdurch wird die Haltekraft der Vorrichtung an der Werkzeugaufnahme erhöht. Durch eine gleichmäßige Beabstandung der radial nach außen vorstehenden Vorsprünge in Umfangsrichtung wird die Vorrichtung zudem verwindungsfrei gelagert.

Besonders bevorzugt kann jeder radial nach außen vorstehende Vorsprung durch einen radial nach außen vorstehenden in Umfangsrichtung verlaufenden Steg gebildet sein. Hierdurch ergibt sich ein besonders großer Anlagebereich zwischen der Vorrichtung und der Werkzeugaufnahme, was eine besonders stabile Befestigung zur Folge hat.

In einer vorteilhaften Ausführungsform können in Umfangsrichtung zwischen den radial nach außen vorstehenden Vorsprüngen Schlitze in dem hülsenförmigen Grundkörper vorgesehen sein. Diese Schlitze können sich bevorzugt ausgehend von dem zweiten Ende des hülsenförmigen Grundkörpers in Richtung des ersten Endes des hülsenförmigen Grundkörpers erstrecken. Durch die Schlitze wird die Elastizität der radial nach außen vorstehenden Vorsprünge in Radialrichtung erhöht, so dass über die Länge der Schlitze die Elastizität vorteilhaft eingestellt werden kann.

Die Ausnehmung kann vorzugsweise nahe, besonders bevorzugt benachbart einem dem offenen ersten Ende abgewandten zweiten Ende die sich seitlich in die Werkzeugaufnahme erstreckende Aussparung aufweisen. In diese Aussparung am Boden der Ausnehmung kann eine beschriebene Vorrichtung, welche einen Datenträger aufweist, mit den radial nach außen vorstehenden Vorsprüngen haltend eingreifen, wodurch eine sichere und stabile Befestigung des Datenträgers an der Werkzeugaufnahme gewährleistet wird.

Bevorzugt kann die Aussparung unmittelbar an dem zweiten, inneren Ende der Ausnehmung, also dem Boden der Ausnehmung, ausgebildet sein. Es ist jedoch auch möglich, die Ausnehmung mit einem geringfügigen Abstand von dem zweiten Ende der Ausnehmung zu positionieren.

In einer vorteilhaften Ausführungsform kann die Ausnehmung als Bohrung ausgebildet sein und ist damit besonders kostengünstig und präzise fertigbar. Es ist jedoch auch möglich, dass die Ausnehmung beispielsweise einen eckigen Querschnitt, insbesondere dreieckigen oder viereckigen Querschnitt aufweist, auch mit abgerundeten Ecken. Hierdurch kann eine entsprechend ausgebildete Vorrichtung zur Befestigung eines Datenträgers lagegenau montiert werden.

Besonders bevorzugt kann die sich seitlich in die Werkzeugaufnahme erstreckende Aussparung als Ringnut ausgebildet sein. Hierdurch wird eine großflächige Anlage für entsprechende radial nach außen vorstehende Vorsprünge an der Vorrichtung zur Befestigung eines Datenträgers geschaffen, was eine besonders stabile Befestigung ermöglicht. Es sei hervorgehoben, dass eine solche Befestigung grundsätzlich gewindelos und ohne zusätzliche Befestigungsmittel (Klebstoffe, Lötverbindungen) erfolgt. Eine zusätzliche Versiegelung bzw. Sicherung mit einem geeigneten Klebstoff z.B. zum Schutz gegen Schmutz ist aber dennoch möglich.

In einer vorteilhaften Ausführungsform kann die Werkzeuganordnung zudem ein Distanzelement umfassen, welches zwischen dem zweiten Ende der Ausnehmung in der Werkzeugaufnahme und dem Datenträger angeordnet ist. Das Distanzelement, welches bevorzugt als elastisches Kunststoffelement, insbesondere als O-Ring, ausgebildet ist, drückt den Datenträger in die vordere Stellung, in welcher der Datenträger an dem radial nach innen vorstehenden Vorsprung am ersten Ende des hülsenförmigen Grundkörpers ansteht. Anstelle des Distanzelements oder zusätzlich hierzu kann an dem hülsenförmigen Grundkörper auch zumindest ein radial nach innen vorstehendes hakenförmiges Element vorgesehen sein, welches den Datenträger in der vorderen Stellung hält. Dieses hakenförmige Element ist von dem radial nach innen vorstehenden Vorsprung am ersten Ende des hülsenförmigen Grundkörpers derart weit beabstandet, dass der Datenträger hierzwischen sicher formschlüssig gehalten wird. Wie auch der mindestens eine radial nach außen vorstehende Vorsprung am zweiten Ende des hülsenförmigen Grundkörpers, kann auch das mindestens eine hakenförmige Element in Radialrichtung elastisch federnd ausgebildet sein. Dies kann unter anderem dadurch erreicht werden, dass sich die Schlitze in dem hülsenförmigen Grundkörper ausgehend von dem zweiten Ende zumindest bis zu dem hakenförmigen Element erstrecken. Durch das hakenförmige Element wird eine einfache Vormontage des Datenträgers an der Vorrichtung ermöglicht.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine perspektivische Darstellung einer Werkzeuganordnung umfassend eine Werkzeugaufnahme, einen Datenträger sowie eine Vorrichtung zur Befestigung des Datenträgers an der Werkzeugaufnahme;
- **Fig. 2**: einen Längsschnitt durch die Werkzeuganordnung von Figur 1;
- **Fig. 3**: eine Detailansicht des Bereichs X von Figur 2;
- **Fig. 4**: eine perspektivische Darstellung der Vorrichtung zur Befestigung eines Datenträgers;
- **Fig. 5**: eine weitere perspektivische Darstellung der Vorrichtung zur Befestigung eines Datenträgers und
- **Fig. 6**: eine perspektivische Darstellung der Montagereihenfolge der Werkzeuganordnung von Figur 1.

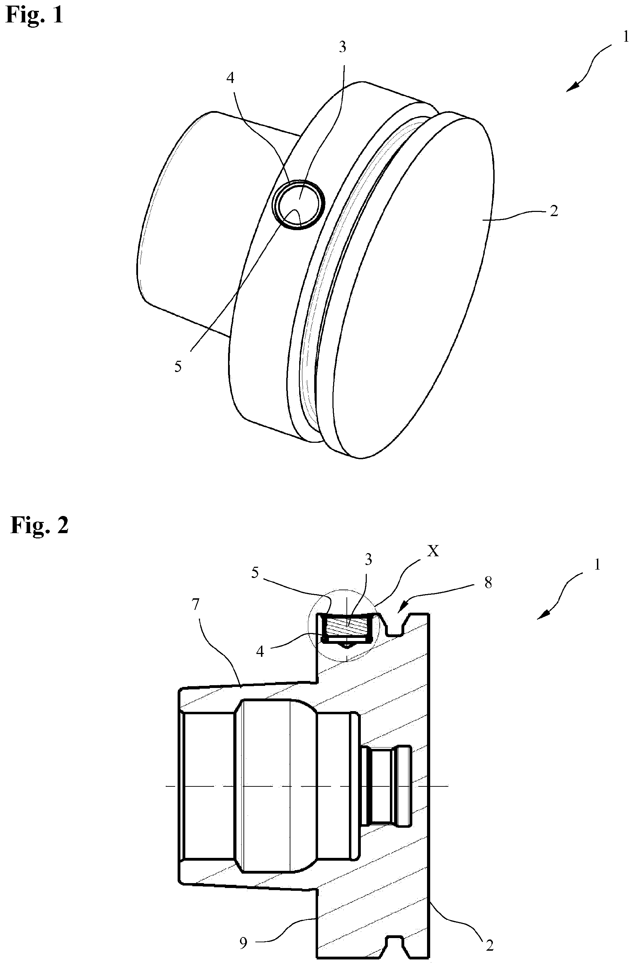

In Figur 1 ist eine perspektivische Darstellung einer Werkzeuganordnung 1 umfassend eine teilweise dargestellte Werkzeugaufnahme 2, einen Datenträger 3 sowie eine Vorrichtung 4 zur Befestigung des Datenträgers 3 an der Werkzeugaufnahme 2 gezeigt. Die Werkzeugaufnahme 2 ist beispielhaft als Hohlschaftkegel ausgebildet und weist eine Aufnahme für den Datenträger 3 auf, welche durch eine nach außen offene Ausnehmung 5 gebildet wird und als Bohrung ausgestaltet ist. In der Ausnehmung 5 ist der Datenträger 3 mittels der Vorrichtung 4 formschlüssig gehalten, wie anhand der nachfolgenden Figuren weiter erläutert wird. Es ist anzumerken, dass die Werkzeugaufnahme 2 lediglich schematisch dargestellt ist, insbesondere der Befestigungsabschnitt für ein Werkzeug ist nicht gezeigt.

In Figur 2 ist ein Längsschnitt durch die Werkzeuganordnung 1 von Figur 1 gezeigt. Wie der Figur 2 zu entnehmen ist, ist die Ausnehmung 5 in der Werkzeugaufnahme 2 zwischen einem Kegelschaft 7 und einer Greiferrille 8 für den automatischen Werkzeugwechsel, insbesondere zwischen einer Plananlage 9 und der Greiferrille 8, angeordnet. Hierdurch wird gewährleistet, dass der Datenträger 3 in der Ausnehmung 5 jederzeit, insbesondere auch bei einer in einer nicht dargestellten Maschinenspindel montierten Werkzeugaufnahme 2 ausgelesen werden kann.

Die Werkzeugaufnahme 2 kann auf der nicht weiter detaillierten rechten Seite beispielsweise ein Schrumpffutter oder ein Spannzangenfutter aufweisen, mit dem ein Werkzeug gegriffen werden kann. Die beschriebenen Merkmale der Werkzeugaufnahme 2 sind insofern universal für alle bekannten Werkzeugaufnahmen verwendbar.

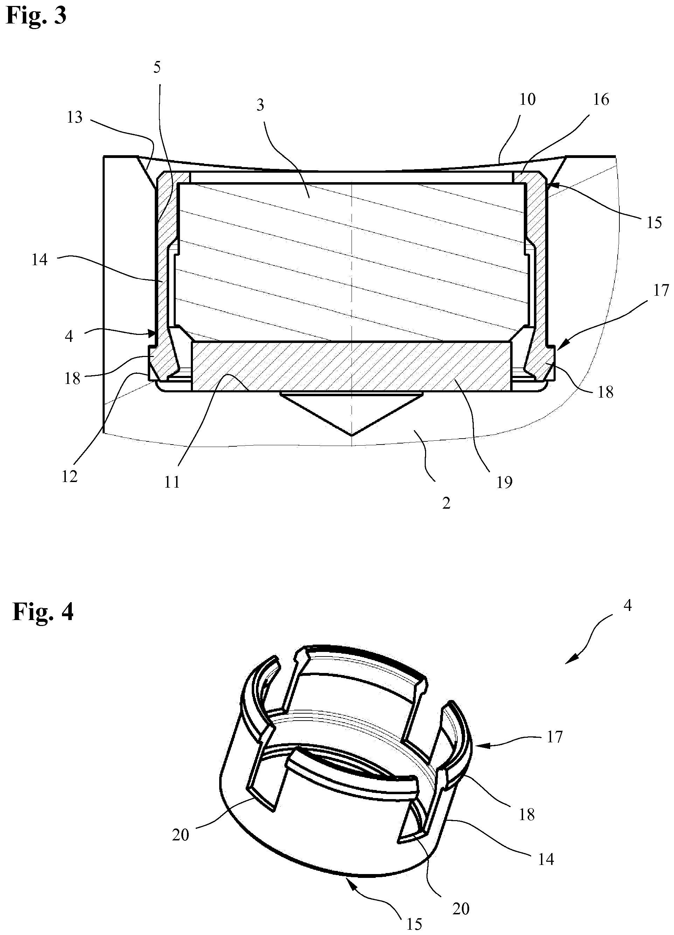

Figur 3 zeigt eine Detailansicht des Bereichs X der Werkzeugaufnahme 2 von Figur 2. In der Detailansicht ist der Bereich der Ausnehmung 5 in der Werkzeugaufnahme 2 dargestellt, in welcher der Datenträger 3 sowie die Vorrichtung 4 zur Befestigung des Datenträgers 3 angeordnet sind. Die Ausnehmung 5 weist ein nach außen offenes Ende 10 und ein dem offenen Ende 10 abgewandtes zweites Ende 11 auf, welches den Boden der Ausnehmung 5 bildet. Im Bereich des zweiten Endes 11 weist die Ausnehmung 5 eine sich seitlich in die Werkzeugaufnahme 2 erstreckende Aussparung 12 auf, welche als Ringnut ausgebildet ist. Im Bereich des ersten Endes 10 weist die Ausnehmung 5 zudem eine Einführfase 13 auf, um die Montage der nachfolgend im Detail beschriebenen Vorrichtung 4 zu erleichtern.

Die Vorrichtung 4 zur Befestigung des Datenträgers 3 an der Werkzeugaufnahme 2 weist einen hülsenförmigen Grundkörper 14 auf, welcher an einem ersten Ende 15 einen radial nach innen vorstehenden, als umlaufenden Ringsteg ausgebildeten Vorsprung 16 aufweist. Der hülsenförmige Grundkörper 14 weist dabei einen Innendurchmesser auf, welcher dem Außendurchmesser des Datenträgers 3 entspricht, so dass der Datenträger 3 formschlüssig in dem hülsenförmigen Grundkörper 14 geführt ist. Der radial nach innen vorstehende Vorsprung 16 am ersten Ende 15 des hülsenförmigen Grundkörpers 14 bildet einen Anschlag für den Datenträger 3.

An einem dem ersten Ende 15 gegenüberliegenden zweiten Ende 17 weist der hülsenförmige Grundkörper 14 mehrere radial nach außen vorstehende Vorsprünge 18 auf, welche als hakenförmige Elemente haltend in die Aussparung 12 in der Ausnehmung 5 der Werkzeugaufnahme 2 eingreifen.

Zudem ist zwischen dem Datenträger 3 und dem zweiten Ende 11 der Ausnehmung 5, also dem Boden der Ausnehmung 5, ein Distanzelement 19 vorgesehen, welches als bevorzugt elastisches Kunststoffelement ausgebildet ist und den Datenträger 3 in Richtung des radial nach innen vorstehenden Vorsprungs 16 beaufschlagt. Hierdurch wird der Datenträger zuverlässig in seiner Stellung nahe dem ersten Ende der Ausnehmung 10, also der Außenseite der Werkzeugaufnahme 2 gehalten. Das Distanzelement 19 kann jedoch auch als O-Ring beispielsweise aus einem elastischen Material wie Kautschuk ausgebildet sein.

In Figur 4 ist die Vorrichtung 4 zur Befestigung eines Datenträgers in einer ersten perspektivischen Darstellung auf das zweite Ende 17 gezeigt. Wie der Figur 4 zu entnehmen ist, sind im Bereich des zweiten Endes 17 des hülsenförmigen Grundkörpers 14 mehrere in Umfangsrichtung gleichmäßig verteilte radial nach außen vorstehende Vorsprünge 18 vorgesehen, welche durch jeweils einen radial nach außen vorstehenden in Umfangsrichtung verlaufenden Steg gebildet werden.

In Umfangsrichtung zwischen den radial nach außen vorstehenden Vorsprüngen 18 sind Schlitze 20 in dem hülsenförmigen Grundkörper 14 vorgesehen. Die Schlitze 20 erstrecken sich dabei ausgehend von dem zweiten Ende 17 des hülsenförmigen Grundkörpers 14 in Richtung des ersten Endes 15 des hülsenförmigen Grundkörpers 14. Die Schlitze 20 bilden damit jeweils eine zum zweiten Ende 17 des hülsenförmigen Grundkörpers 14 hin offene Tasche. Durch die Schlitze 20 wird die elastische radiale Beweglichkeit der radial nach außen vorstehenden Vorsprünge 18 am zweiten Ende 17 des hülsenförmigen Grundkörpers 14 beeinflusst. Damit kann je nach Wahl des Materials für die Vorrichtung 4 und der Geometrie der Vorrichtung 4, insbesondere der Wandstärke des hülsenförmigen Grundkörpers 14, mittels der Länge und auch der Breite der Schlitze 20 die radiale Elastizität der radial nach außen vorstehenden Vorsprünge 18 eingestellt werden.

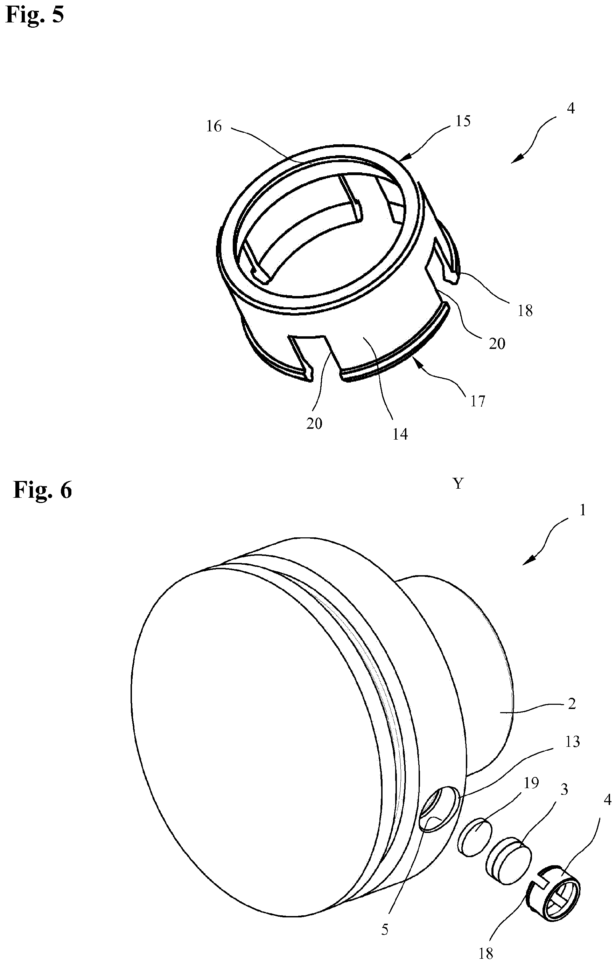

In Figur 5 ist die Vorrichtung 4 zur Befestigung eines Datenträgers in einer zweiten perspektivischen Darstellung auf das erste Ende 15 gezeigt. Wie der Figur 5 zu entnehmen ist, ist der radial nach innen vorstehende Vorsprung 16 als umlaufender Ringsteg am ersten Ende des hülsenförmigen Grundkörpers 14 ausgebildet. Im Übrigen weist der hülsenförmige Grundkörper 14 eine zylindrische Außenkontur auf, über welche nur die Vorsprünge 18 am zweiten Ende des hülsenförmigen Grundkörpers 14 radial nach außen vorstehen.

In Figur 6 ist eine perspektivische Darstellung der Montagereihenfolge der Werkzeuganordnung 1 von Figur 1 gezeigt. Eine schnelle Montage wird dadurch erreicht, dass zuerst der Datenträger 3 in die Vorrichtung 4 eingesetzt wird. Das Distanzelement 19 kann bereits an dem Datenträger 3 vormontiert oder im nachfolgenden Schritt montiert werden. Das die Verbindung zwischen dem Datenträger 3 und dem Distanzelement 19 lediglich für die Montage relevant ist, eignen sich hierfür einfache Klebeverfahren. Im abschließenden Montageschritt kann die Vorrichtung mit dem Datenträger und dem Distanzelement, welche in dieser Zusammenstellung besonders gut vorfertigbar sind, in die Ausnehmung 5 in der Werkzeugaufnahme 2 eingesetzt werden.

Der Innendurchmesser der Ausnehmung 5 entspricht dabei zuzüglich des üblichen Montagespiels im Wesentlichen dem Außendurchmesser des hülsenförmigen Grundkörpers 14 der Vorrichtung 4. Beim Einfügen der Vorrichtung 4 in die Ausnehmung 5 werden die radial nach außen vorstehenden Vorsprünge 18 am hülsenförmigen Grundkörper 14 aufgrund des gegenüber dem Innendurchmesser der Ausnehmung 5 größeren Außendurchmesser unterstützt durch die Einführfase 13 radial nach innen elastisch verformt. Wird die Vorrichtung 4 vollständig in die Ausnehmung 5 eingeschoben, federn die Vorsprünge 18 radial nach außen in die Aussparung 12 in der Ausnehmung 5 ein und hintergreifen diese haltend. Durch die Ausbildung der Schlitze 20, die Wandstärke des hülsenförmigen Grundkörpers 14, die Materialwahl sowie die Wahl des Außendurchmessers der radial nach außen vorstehenden Vorsprünge 18 kann die Haltekraft der Vorrichtung 4 einfach beeinflusst werden.

### Bezugszeichenliste

- 1: Werkzeuganordnung
- 2: Werkzeugaufnahme
- 3: Datenträger
- 4: Vorrichtung zur Befestigung des Datenträgers
- 5: Aufnahme/ Ausnehmung in der Werkzeugaufnahme
- 6: Verrastvorrichtung
- 7: Kegelschaft
- 8: Greiferrille
- 9: Plananlage
- 10: Erstes Ende der Ausnehmung
- 11: Zweites Ende der Ausnehmung
- 12: Aussparung in Ausnehmung
- 13: Einführfase
- 14: Hülsenförmiger Grundkörper
- 15: Erstes Ende des hülsenförmigen Grundkörpers
- 16: Radial nach innen vorstehender Vorsprung
- 17: Zweites Ende des hülsenförmigen Grundkörpers
- 18: Radial nach außen vorstehender Vorsprung
- 19: Distanzelement
- 20: Schlitz

## Patentansprüche

1. Werkzeuganordnung (1) umfassend eine Werkzeugaufnahme (2), einen Datenträger (3) und eine Vorrichtung (4) zur Befestigung des Datenträgers (3) an der Werkzeugaufnahme (2), wobei die Werkzeugaufnahme (2) eine Aufnahme (5) für den Datenträger (3) aufweist, wobei die Aufnahme (5) durch eine nach außen offene Ausnehmung (5) in der Werkzeugaufnahme (2) gebildet wird, wobei die Ausnehmung (5) eine sich seitlich in die Werkzeugaufnahme (2) erstreckende Aussparung (12) aufweist, **dadurch gekennzeichnet, dass** die Vorrichtung (4) zur Befestigung des Datenträgers (3) an der Werkzeugaufnahme (2) einen hülsenförmigen Grundkörper (14) umfasst, welcher an einem ersten Ende (15) mindestens einen radial nach innen vorstehenden Vorsprung (16) und im Bereich eines dem ersten Ende (15) gegenüberliegenden zweiten Ende (17) mindestens einen radial nach außen vorstehenden Vorsprung (18) aufweist.

2. Werkzeuganordnung (1) nach Anspruch 1, **dadurch gekennzeichnet, dass** der radial nach innen vorstehende Vorsprung (16) durch einen radial nach innen vorstehenden umlaufenden Ringsteg gebildet wird.

3. Werkzeuganordnung (1) nach Anspruch 1 oder 2, **dadurch gekennzeichnet, dass** der mindestens eine radial nach außen vorstehende Vorsprung (18) in Radialrichtung elastisch beweglich ausgebildet ist.

4. Werkzeuganordnung (1) nach einem der Ansprüche 1 bis 3, **dadurch gekennzeichnet, dass** im Bereich des zweiten Endes (17) des hülsenförmigen Grundkörpers (14) mehrere in Umfangsrichtung voneinander beabstandete radial nach außen vorstehenden Vorsprünge (18) vorgesehen sind.

5. Werkzeuganordnung (1) nach Anspruch 4, **dadurch gekennzeichnet, dass** jeder radial nach außen vorstehender Vorsprung (18) durch einen radial nach außen vorstehenden in Umfangsrichtung verlaufenden Steg gebildet wird.

6. Werkzeuganordnung (1) nach Anspruch 5, **dadurch gekennzeichnet, dass** in Umfangsrichtung zwischen den radial nach außen vorstehenden Vorsprüngen (18) Schlitze (20) in dem hülsenförmigen Grundkörper (14) vorgesehen sind.

7. Werkzeuganordnung (1) nach Anspruch 6, **dadurch gekennzeichnet, dass** sich die Schlitze (20) ausgehend von dem zweiten Ende (17) des hülsenförmigen Grundkörpers (14) in Richtung des ersten Endes (15) des hülsenförmigen Grundkörpers (14) erstrecken.

8. Werkzeuganordnung (1) nach einem der voranstehenden Ansprüche, **dadurch gekennzeichnet, dass** die Aussparung (12) vorzugsweise nahe und besonders bevorzugt benachbart einem einem offenen ersten Ende (10) abgewandten zweiten Ende (11) der Ausnehmung (5) angebracht ist.

9. Werkzeuganordnung (1) nach einem der voranstehenden Ansprüche, **dadurch gekennzeichnet, dass** die Ausnehmung (5) als Bohrung ausgebildet ist.

10. Werkzeuganordnung (1) nach einem der voranstehenden Ansprüche, **dadurch gekennzeichnet, dass** die sich seitlich in die Werkzeugaufnahme (2) erstreckende Aussparung (12) als Ringnut ausgebildet ist.

11. Werkzeuganordnung (1) nach einem der voranstehenden Ansprüche, **dadurch gekennzeichnet, dass** ein Distanzelement (19) vorgesehen ist, welches zwischen dem zweiten Ende (11) der Ausnehmung (5) in der Werkzeugaufnahme (2) und dem Datenträger (3) angeordnet ist.

12. Werkzeuganordnung nach Anspruch 11, **dadurch gekennzeichnet, dass** das Distanzelement (19) ein elastisches Kunststoffelement umfasst.

13. Werkzeuganordnung nach Anspruch 11 oder 12, **dadurch gekennzeichnet, dass** das Distanzelement (19) als O-Ring ausgebildet ist.

## Claims

1. Tool arrangement (1) comprising a tool receptacle (2), a data carrier (3) and a device (4) for fastening the data carrier (3) to the tool receptacle (2), wherein the tool receptacle (2) has a receptacle (5) for the data carrier (3), wherein the receptacle (5) is formed by an outwardly open recess (5) in the tool receptacle (2), wherein the recess (5) has a cutout (12) extending laterally into the tool receptacle (2), **characterized in that** the device (4) for fastening the data carrier (3) to the tool receptacle (2) comprise a sleeve-like main body (14) which has, at a first end (15), at least one radially inwardly protruding protrusion (16) and, in the region of a second end (17) opposite to the first end (15), at least one radially outwardly protruding protrusion (18).

2. Tool arrangement (1) according to Claim 1, **characterized in that** the radially inwardly protruding protrusion (16) is formed by a radially inwardly protruding encircling annular web.

3. Tool arrangement (1) according to Claim 1 or 2, **characterized in that** the at least one radially outwardly protruding protrusion (18) is configured to be elastically movable in a radial direction.

4. Tool arrangement (1) according to one of Claims 1 to 3, **characterized in that** a plurality of radially outwardly protruding protrusions (18) that are spaced apart from one another in the circumferential direction are provided in the region of the second end (17) of the sleeve-like main body (14).

5. Tool arrangement (1) according to Claim 4, **characterized in that** each radially outwardly protruding protrusion (18) is formed by a radially outwardly protruding web that extends in the circumferential direction.

6. Tool arrangement (1) according to Claim 5, **characterized in that** slots (20) are provided in the sleeve-like main body (14) in the circumferential direction between the radially outwardly protruding protrusions (18).

7. Tool arrangement (1) according to Claim 6, **characterized in that** the slots (20) extend from the second end (17) of the sleeve-like main body (14) in the direction of the first end (15) of the sleeve-like main body (14).

8. Tool arrangement (1) according to one of the preceding claims, **characterized in that** the cutout (12) is provided preferably close to and particularly preferably next to a second end (11), remote from an open first end (10), of the recess (5) .

9. Tool arrangement (1) according to one of the preceding claims, **characterized in that** the recess (5) is in the form of a bore.

10. Tool arrangement (1) according to one of the preceding claims, **characterized in that** the cutout (12) extending laterally into the tool receptacle (2) is in the form of an annular groove.

11. Tool arrangement (1) according to one of the preceding claims, **characterized in that** a spacer element (19) is provided, which is arranged between the second end (11) of the recess (5) in the tool receptacle (2) and the data carrier (3).

12. Tool arrangement according to Claim 11, **characterized in that** the spacer element (19) comprises an elastic plastics element.

13. Tool arrangement according to Claim 11 or 12, **characterized in that** the spacer element (19) is in the form of an O-ring.

## Revendications

1. Ensemble d'outil (1) comprenant un logement d'outil (2), un support de données (3) et un dispositif (4) pour la fixation du support de données (3) sur le logement d'outil (2), le logement d'outil (2) présentant un logement (5) pour le support de données (3), le logement (5) étant formé par un évidement (5) ouvert vers l'extérieur dans le logement d'outil (2), l'évidement (5) présentant une échancrure (12) s'étendant latéralement dans le logement d'outil (2), **caractérisé en ce que** le dispositif (4) pour la fixation du support de données (3) sur le logement d'outil (2) comprend un corps de base en forme de manchon (14), qui présente à une première extrémité (15) au moins une saillie (16) faisant saillie radialement vers l'intérieur et dans la zone d'une deuxième extrémité (17) opposée à la première extrémité (15) au moins une saillie (18) faisant saillie radialement vers l'extérieur.

2. Ensemble d'outil (1) selon la revendication 1, **caractérisé en ce que** la saillie (16) faisant saillie radialement vers l'intérieur est formée par une nervure annulaire périphérique faisant saillie radialement vers l'intérieur.

3. Ensemble d'outil (1) selon la revendication 1 ou 2, **caractérisé en ce que** l'au moins une saillie (18) faisant saillie radialement vers l'extérieur est configurée sous forme élastiquement mobile dans la direction radiale.

4. Ensemble d'outil (1) selon l'une quelconque des revendications 1 à 3, **caractérisé en ce que** dans la zone de la deuxième extrémité (17) du corps de base en forme de manchon (14) sont prévues plusieurs saillies (18) espacées les unes des autres dans la direction circonférentielle, faisant saillie radialement vers l'extérieur.

5. Ensemble d'outil (1) selon la revendication 4, **caractérisé en ce que** chaque saillie (18) faisant saillie radialement vers l'extérieur est formée par une nervure s'étendant dans la direction circonférentielle, faisant saillie radialement vers l'extérieur.

6. Ensemble d'outil (1) selon la revendication 5, **caractérisé en ce que** des fentes (20) sont prévues dans le corps de base en forme de manchon (14), dans la direction circonférentielle, entre les saillies (18) faisant saillie radialement vers l'extérieur.

7. Ensemble d'outil (1) selon la revendication 6, **caractérisé en ce que** les fentes (20) s'étendent depuis la deuxième extrémité (17) du corps de base en forme de manchon (14) en direction de la première extrémité (15) du corps de base en forme de manchon (14).

8. Ensemble d'outil (1) selon l'une quelconque des revendications précédentes, **caractérisé en ce que** l'échancrure (12) est de préférence située à proximité et de manière particulièrement préférée au voisinage d'une deuxième extrémité (11) de l'évidement (5) détournée d'une première extrémité ouverte (10).

9. Ensemble d'outil (1) selon l'une quelconque des revendications précédentes, **caractérisé en ce que** l'évidement (5) est configuré sous forme d'alésage.

10. Ensemble d'outil (1) selon l'une quelconque des revendications précédentes, **caractérisé en ce que** l'échancrure (12) s'étendant latéralement dans le logement d'outil (2) est configurée sous forme de rainure annulaire.

11. Ensemble d'outil (1) selon l'une quelconque des revendications précédentes, **caractérisé en ce qu'**un élément d'écartement (19) est prévu, qui est agencé entre la deuxième extrémité (11) de l'évidement (5) dans le logement d'outil (2) et le support de données (3).

12. Ensemble d'outil selon la revendication 11, **caractérisé en ce que** l'élément d'écartement (19) comprend un élément en matière plastique élastique.

13. Ensemble d'outil selon la revendication 11 ou 12, **caractérisé en ce que** l'élément d'écartement (19) est configuré sous forme de joint torique.
